# EUROPEAN PATENT APPLICATION

(11) **EP 4 369 567 A2**
(43) Date of publication of application: **15.05.2024**
(21) Application number: 23208145.5
(22) Date of filing: 07.11.2023
(51) Int. Cl.: H02J 50/10, H02J 50/80, H04B 5/79

(54) **WIRELESS CHARGING MODULES INCLUDING OPTIMIZED NEAR-FIELD COMMUNICATION (NFC) ANTENNAS**

(30) Priority: 08.11.2022 US 202263423738 P
(71) Applicant: Molex CVS Bochum GmbH, 44807 Bochum (DE); Molex Technologies GmbH, 12529 Schönefeld (DE)
(72) Inventor: Serafimoska-Nedanovska, Jasminka, Berlin (DE); Holz, Rainer, Berlin (DE); Reif, Reinhold, Schwaig (DE); Unterberg, Martin, Bochum (DE)
(74) Representative: Ter Meer Steinmeister & Partner

(57) **Abstract**

Exemplary embodiments are disclosed of wireless charging modules including optimized near-field communication (NFC) antennas and that are suitable for use in vehicle applications (*e*.*g*., cars, trucks, buses, *etc*.). In an exemplary embodiment, a wireless charging module includes a near-field communication (NFC) antenna extending across (*e*.*g*., disposed over, *etc*.) an inductive charging coil. The NFC antenna is configured to enable communication with a mobile device having an NFC antenna when the mobile device is placed on the charging surface of the wireless charging module. The NFC antenna may comprise a foil antenna, a thin film antenna, or antenna structure printed, metallized, and/or directly mounted in and/or along either or both sides of a top cover of the wireless charging module.

## Description

This application claims priority to United States Provisional Application No. 63/423,738 filed November 8, 2022.

### TECHNICAL FIELD

This disclosure relates to the field of wireless chargers in vehicles, more specifically to optimized or improved near-field communication antennas for wireless chargers and the use of orientation controlling features in wireless chargers.

### DESCRIPTION OF RELATED ART

Wireless charges are commonly used to charge mobile devices. When the transmitting and receiving coil are well aligned, the performance of the wireless charging system is close to the efficiency of a wired connection but avoids the hassle of needing to plug in a device and allows for a mobile device to be both wirelessly powered and wirelessly connected to the vehicle. One issue that exists is that each mobile device has its own shape (such shape being impossible to predict in advance as such shapes can change each year) and the location of a receiving coil is not uniform. Thus, it is difficult to arrange the coil of the wireless charger in a location that ensures high efficiency.

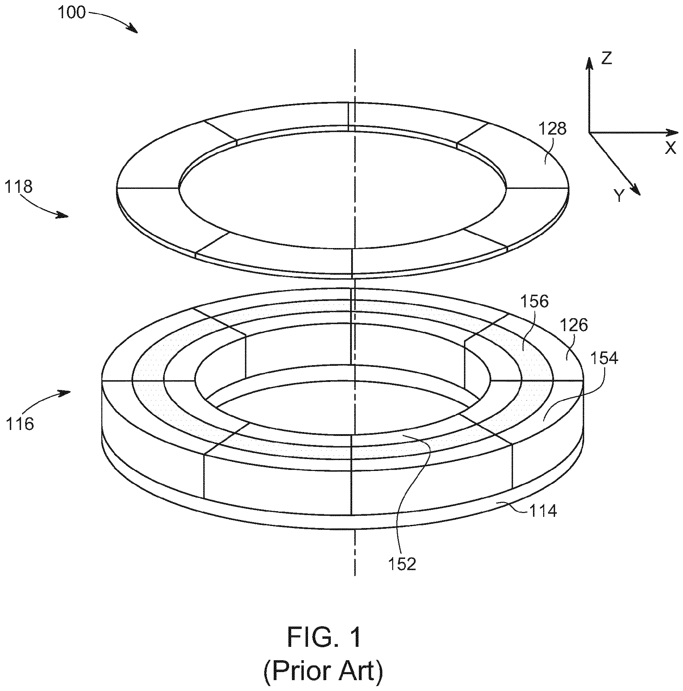

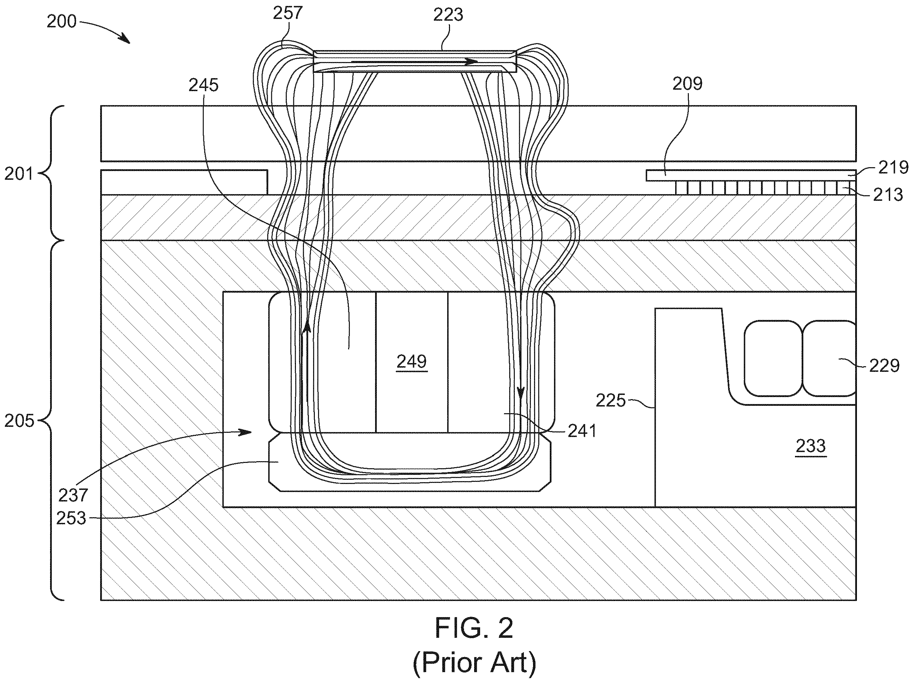

One attempt to overcome this has included adding additional coils so that one coil is always in a reasonably efficient location. Optimum efficiency, however, is not ensured with such an approach, instead such an approach can only ensure reasonable efficiency. APPLE has developed a wireless charging system known as MAGSAFE and such a system works by using two magnetic rings, one in the charger and one in the mobile device, to ensure there is a nearly ideal alignment between the transmission coil and the receiving coil (at least within the X and Y direction) and thus helps address the problem in a significant manner. FIGS. 1 and 2 illustrate how the magnetic alignment system 100 functions. In operation, two coils are positioned inside each of the magnetic rings and the magnetic attraction helps ensure the coils are aligned accurately with respect to each other with only the Z-axis alignment being uncertain (because mobile devices, for example, may have a case of varying thickness).

As shown in FIG. 1, the magnetic alignment system 100 includes primary and secondary alignment components 116, 118 respectively including primary and second magnets 126, 128. Each primary magnet 126 may include two arcuate pieces of magnetic material providing inner arcuate magnetic region 152 having a magnetic orientation in a first axial direction, an outer arcuate magnetic region 154 having a magnetic orientation in a second axial direction opposite the first direction, and a central non-magnetized region 156 that does not have a magnetic orientation An annular shield 114 (also referred to as a DC magnetic shield or DC shield) is disposed on a distal surface of primary magnets 126.

FIG. 2 is a cross-sectional view of a system 200 including a portable electronic device 201 in alignment with a wireless charger device 205. The coil assembly 209 of the portable electronic device 201 includes an inductive receiver coil 213 and shielding 219. A secondary magnet 223 of the portable electronic device 201 forms a portion of secondary magnetic alignment and can have a magnetic field oriented in a radially inward direction (as shown by the arrow).

The wireless charger device 205 includes a transmitter coil assembly 225 including an inductive transmitter coil 229 and electromagnetic shielding 233. Primary magnet 237 forms a portion of primary magnetic alignment component and can include an inner arcuate region 241 having a magnetic field oriented in a first axial direction, an outer arcuate region 245 having a magnetic field oriented in a second axial direction opposite the first axial direction, and a non-magnetized central arcuate region 249. A DC shield 253 can be disposed on the distal surface of primary magnet 237.

When aligned, primary magnet 237 and secondary magnet 223 produce a closed-loop magnetic flux as shown by lines 257. Magnetic flux 257 can attract primary annular alignment component and secondary annular alignment component into alignment such that the respective centers of primary annular alignment component and secondary annular alignment component are aligned along a common axis. Since transmitter coil 229 is fixed in a position concentric with primary alignment component and receiver coil 213 is fixed in position concentric with secondary alignment component, a result of aligning primary annular alignment component and secondary annular alignment component along a common axis is that transmitter coil 229 and receiver coil 213 are also aligned along a common axis, thereby enabling efficient wireless power transfer.

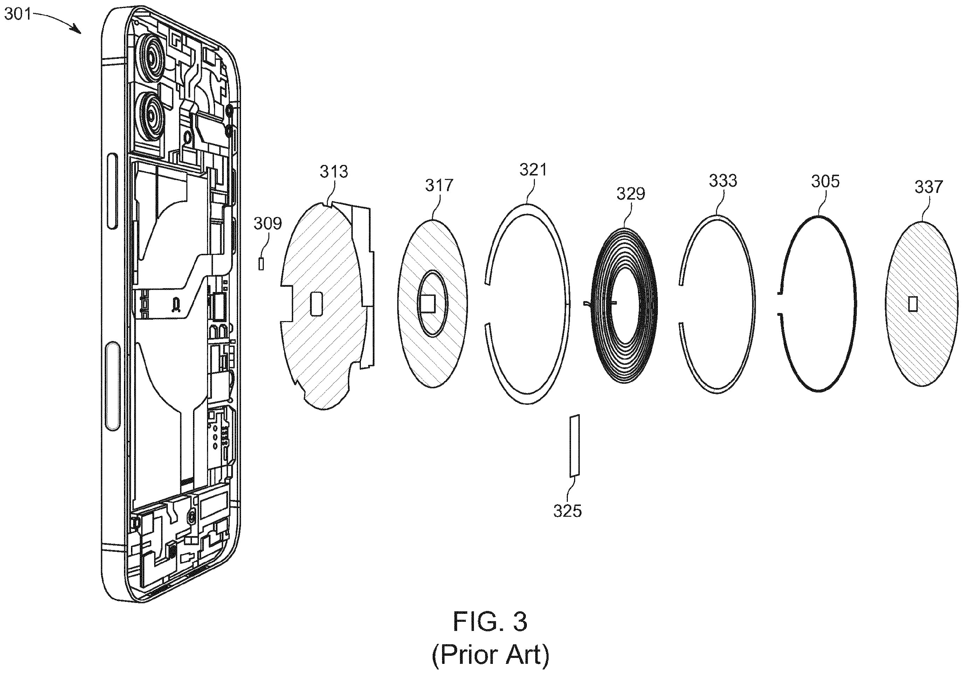

FIG. 3 shows an example mobile device 301 (*e.g*., an IPHONE smartphone with MAGSAFE technology, *etc*.) including an NFC antenna coil 305 that may be coupled with an NFC reader circuit of the mobile device 301. The mobile device 301 further includes a magnetometer 309, a copper-graphite electromagnetic interference (EMI) shield 313, a nanocrystalline magnetic shield 317, a magnet array 321, an alignment magnet 325, a charging coil 329, a polycarbonate housing 333, and an electric shield (E-shield) 337.

The electric shield 337 is configured to block AC electric fields emitted by wireless transmitter (Tx) coil during operation while permitting AC magnetic fields to pass through. The nanocrystalline magnetic shield 317 is configured to prevent the magnetic field from entering the mobile device 301 behind the charging Rx coil. The NFC antenna coil 305 is configured to be disposed in the annular space between the outer edge of electric shield 337 and the inner edge of the magnet array 321. The NFC antenna coil 305 is a single-turn multi-stranded wire coil. The magnet array 321 and the alignment magnet 325 are configured to magnetically couple with a complementary annular magnetic alignment component and alignment magnet of a wireless charging module for aligning the mobile device's charging Rx coil with the transmit (Tx) coil of the wireless charging module in a preferred charging location and rotational orientation at which the mobile device 301 will receive maximum or optimum power from the wireless charging module.

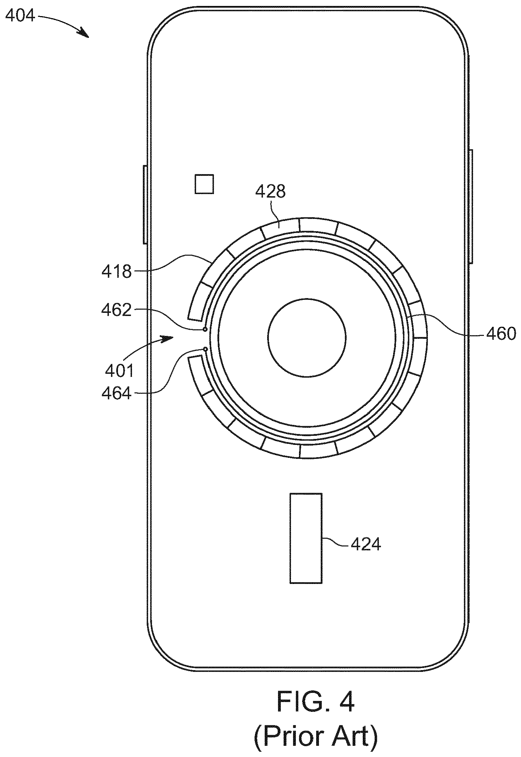

FIG. 4 shows an example mobile device 404 (*e.g*., an IPHONE smartphone with MAGSAFE technology, *etc*.) including an NFC coil 460 and magnetic alignment components 418 and 424 that facilitate alignment of the mobile device 404 with a wireless charging module or accessory having complementary magnetic alignment components. The mobile device 404 includes AC magnetic and/or electric shield(s) disposed around some or all surfaces of the wireless receiver coil 412. Each arcuate magnet 428 may have a magnetic orientation having a radial component, *e.g*., radially inward or radially outward. The annular magnetic alignment component 418 can include a gap 401 for electrical connections to wireless receiver coil assembly 412.

The rotational magnetic alignment component 424 facilitates aligning the mobile device 404 with a wireless charging module or accessory having a complementary rotational magnetic alignment component in a preferred rotational orientation.

The NFC coil 460 is between the annular magnetic alignment component 418 and wireless receiver coil assembly 412. The NFC coil 460 is a single turn of a double-stranded copper wire having terminals 462, 464 for connection with an NFC reader circuit on a main logic board of the mobile device 404.

By way of further background, 15 Watt (15W) automotive wireless chargers are commonly used for charging mobile devices (*e.g*., mobile phones, *etc.*) in vehicles for faster charging and shorter charging times of mobile devices. Although automotive wireless chargers are convenient for a user to charge a mobile device, the user may still need to manually change profiles on the mobile device to perform certain operations inside the vehicle. Advantageously, some mobile device applications can be programmed to launch at the detection of an NFC module within a vehicle. For example, a mobile device including an NFC antenna may be configured such that after detecting an NFC module within a vehicle, the mobile device may then automatically turn on or off a short-range wireless communication interface (*e.g.* BLUETOOTH, *etc*.) of the mobile device, turn on or off a Wi-Fi interface of the mobile device, enable a Wi-Fi access point mode of the mobile device, turn cellular (*e.g*., LTE, *etc.*) data of the mobile device on or off, change a ringing volume of the mobile device, open an application (*e.g*., music, maps, *etc.*) on the mobile device, *etc.*

In a vehicle application, however, the current designs may not be suitable in all cases. Accordingly, certain individuals would appreciate further improvements in automotive wireless charging systems.

### SUMMARY

This section provides a general summary of the disclosure and is not a comprehensive disclosure of its full scope or all of its features.

The object of the present invention is to provide improvements in automotive wireless charging systems. Preferred embodiments are given in the dependent claims.

Exemplary embodiments are disclosed of wireless charging modules including optimized near-field communication (NFC) antennas and that are suitable for use in vehicle applications (*e.g*., cars, trucks, buses, *etc.*)*.* In an exemplary embodiment, a wireless charging module includes a near-field communication (NFC) antenna extending across (*e.g*., disposed over, *etc.*) an inductive charging coil. The NFC antenna is configured to enable communication with a mobile device having an NFC antenna when the mobile device is placed on the charging surface of the wireless charging module. The NFC antenna may comprise a foil antenna, a thin film antenna, or antenna structure printed, metallized, and/or directly mounted in and/or along either or both sides of a top cover of the wireless charging module.

In one aspect of the disclosure a wireless charging module is provided comprising: a housing that defines an enclosure; an inductive charging coil within the housing, the inductive charging coil configured to be operable for transferring power wirelessly through a charging surface of the wireless charging module; a magnetic alignment component configured to magnetically couple with a complementary magnetic alignment component of a mobile device for aligning the mobile device on the charging surface of the wireless charging module; and a near-field communication (NFC) antenna extending across the inductive charging coil, whereby the NFC antenna is configured to enable communication with a mobile device having an NFC antenna when the mobile device is placed on the charging surface.

IN the following optional features are provided to further improve the above mentioned aspect of the disclosure. They can be combined with the above mentioned aspect alone or in combination or sub-combination.

In one or more embodiments, the NFC antenna may be configured to enable the wireless charging module to support and detect an NFC antenna of a mobile device placed anywhere on the charging surface of the wireless charging module.

In one or more embodiments, the NFC antenna may extend along a sufficient portion of an entirety or substantial entirety of the charging surface of the wireless charging module to enable the wireless charging module to support and detect an NFC antenna of a mobile device placed anywhere on the charging surface of the wireless charging module.

In one or more embodiments, the NFC antenna may extend across the magnetic alignment component.

In one or more embodiments, the NFC antenna may comprise a foil or thin film antenna including antenna structure disposed on or defined by a foil or thin film.

In one or more embodiments, the housing may include a top cover having opposite upper and lower sides.

In one or more embodiments, the NFC antenna may comprises antenna structure printed along either or both of the opposite upper and lower sides of the top cover.

In one or more embodiments, the NFC antenna may comprise antenna structure defined by selective metallization along either or both of the opposite upper and lower sides of the top cover.

In one or more embodiments, the NFC antenna may comprise metallic antenna structure directly mounted in and/or along either or both of the opposite upper and lower sides of the top cover.

In one or more embodiments, the magnetic alignment component may comprise a segmented or fragmented magnetic ring.

In one or more embodiments, the housing may include a first surface that substantially defines a top side of the housing.

In one or more embodiments, the segmented or fragmented magnetic ring may be above the first surface of the housing.

In one or more embodiments, the segmented or fragmented magnetic ring may be located higher than the NFC antenna.

In one or more embodiments, the wireless charging module may comprise a compliant cover positioned on the first surface of the housing.

In one or more embodiments, the segmented or fragmented magnetic ring may be positioned in the compliant cover.

In one or more embodiments, the segmented or fragmented magnetic ring may be substantially concentric with the inductive charging coil.

In one or more embodiments, a ferromagnetic ring may be disposed under the segmented or fragmented magnetic ring.

In one or more embodiments, the NFC antenna may comprise a printed circuit board (PCB) antenna including NFC antenna structure on a PCB substrate.

In one or more embodiments, the NFC antenna structure on the PCB substrate may extend along a sufficient portion of an entirety or substantial entirety of the charging surface of the wireless charging module to enable the wireless charging module to support and detect an NFC antenna of a mobile device placed anywhere on the charging surface of the wireless charging module.

In one or more embodiments, the wireless charging module may comprise a shielding disposed under the inductive charging coil.

In one or more embodiments, the shielding may be configured for providing protection against a magnetic field generated by the inductive charging coil while also supporting wireless charging and NFC frequency bands.

In one or more embodiments, the magnetic alignment component may comprise an annular magnetic alignment component that may be substantially concentric with and/or generally surrounds the inductive charging coil.

In one or more embodiments, the annular magnetic alignment component may comprises a full circular ring that may entirely surround the inductive charging coil or a partial circular ring having first and second end portions that may be spaced apart such that a gap is defined between the first and second end portions.

In one or more embodiments, the wireless charging module may further comprise an annular magnetic shield formed from one or more materials having a high magnetic permeability.

In one or more embodiments, the wireless charging module may further comprise an annular magnetic shield configured for redirecting magnetic fields to prevent the magnetic fields from propagating beyond the annular magnetic shield to thereby protect sensitive electronic components located beyond the annular magnetic shield from magnetic interference.

In one or more embodiments, the wireless charging module may further comprise a support structure within the housing.

In one or more embodiments, the support structure may be configured for supporting the inductive charging coil, the magnetic alignment component, and a magnetic shield disposed under the magnetic alignment component.

In one or more embodiments, the wireless charging module may include first and second printed circuit board (PCBs) vertically spaced apart from each other.

In one or more embodiments, the first PCB may include a first PCB substrate and a first NFC antenna structure along the first PCB substrate.

In one or more embodiments, the second PCB may include a second PCB substrate and a second NFC antenna structure along the second PCB substrate.

In one or more embodiments, the second PCB substrate may be vertically spaced apart from the first PCB substate.

In one or more embodiments, the first and second NFC antenna structures may be electrically connected to thereby cooperatively define the NFC antenna of the wireless charging module.

In one or more embodiments, the magnetic alignment component may comprise first and second magnets at a substantially same height as the first PCB substrate.

In one or more embodiments, the first PCB may include first and second opposite sides.

In one or more embodiments, the first NFC antenna structure may include a first loop portion within an interior area along the first side of the first PCB defined between the first and second magnets without vertically overlapping the first and second magnets.

In one or more embodiments, the first PCB may include or define an electrical field shield (E-shield) grid along the second side of the first PCB.

In one or more embodiments, the second NFC antenna structure along the second PCB substrate may be outside of the first and second magnets without vertically overlapping the first and second magnets.

In one or more embodiments, the second NFC antenna structure may include an inner loop portion, an intermediate loop portion, and an outer loop portion, the outer loop portion along an outer perimeter of the second PCB substrate, the inner loop portion along the second PCB substrate outside of a footprint of the first loop portion along the first PCB substrate, the intermediate loop portion along the second PCB substrate generally between the inner loop portion and the outer loop portion.

In one or more embodiments, the NFC antenna may be cooperatively defined by the first and second NFC antenna structures including the first loop portion along the first PCB substrate and the inner, intermediate, and outer loop portions along the second PCB substrate such that the NFC antenna is along a sufficient portion of an entirety or substantial entirety of the charging surface of the wireless charging module to enable the wireless charging module to support and detect an NFC antenna of a mobile device placed anywhere the charging surface of the wireless charging module.

In one or more embodiments, the NFC antenna may be coupled with an NFC module within the housing of the wireless charging module, whereby placement of a mobile device on the charging surface enables communication from the NFC module of the wireless charging module to an NFC reader circuit coupled with an NFC antenna of the mobile device.

Further areas of applicability will become apparent from the description provided herein. The description and specific examples in this summary are intended for purposes of illustration only and are not intended to limit the scope of the present disclosure.

### DRAWINGS

The present application is illustrated by way of example and not limited in the accompanying figures in which like reference numerals indicate similar elements and in which:
FIGS. 1 and 2 illustrate features of a prior art wireless charging system.
FIG. 3 is an exploded perspective of a mobile device showing an NFC coil, a wireless receiver coil assembly, and magnetic alignment components that may be used to facilitate alignment of the mobile device with a wireless charging module or accessory having complementary magnetic alignment components.
FIG. 4 shows a simplified back view of a mobile device including an NFC coil, a wireless receiver coil assembly, and magnetic alignment components that may be used to facilitate alignment of the mobile device with a wireless charging module or accessory having complementary magnetic alignment components.

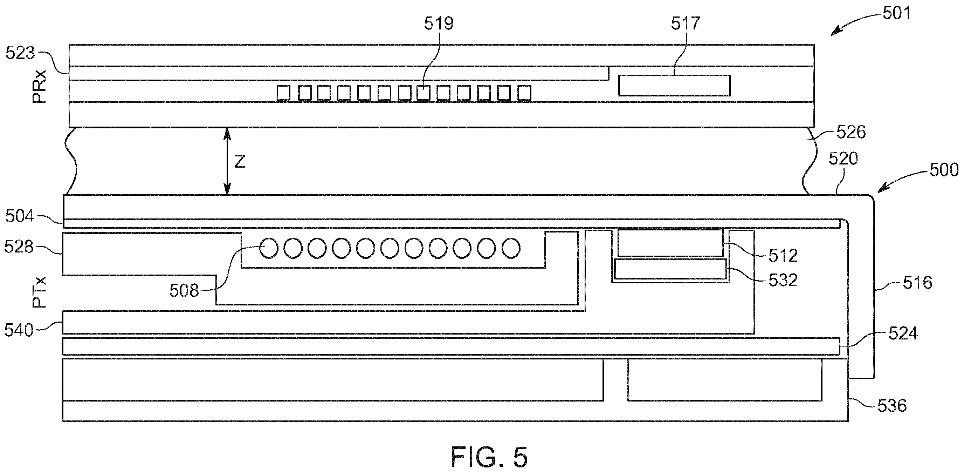

FIG. 5 is a partial cross-sectional view showing a mobile device positioned on an automotive wireless charging module according to an exemplary embodiment of the present disclosure in which the automotive wireless charging module includes an NFC foil antenna.

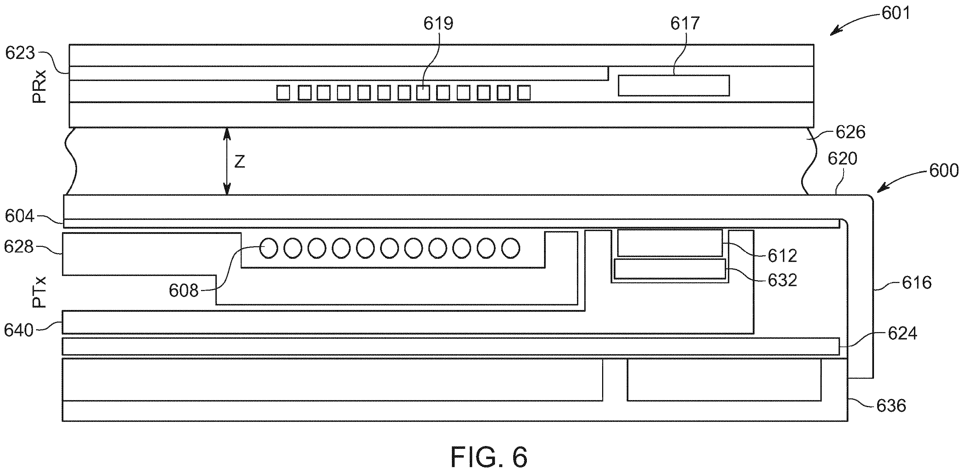

FIG. 6 is a partial cross-sectional view showing a mobile device positioned on an automotive wireless charging module according to an exemplary embodiment of the present disclosure in which the automotive wireless charging module includes an NFC antenna provided (e.g., via selective metallization or printing, *etc*.) along one or both sides of a top cover of the enclosure of the automotive wireless charging module.

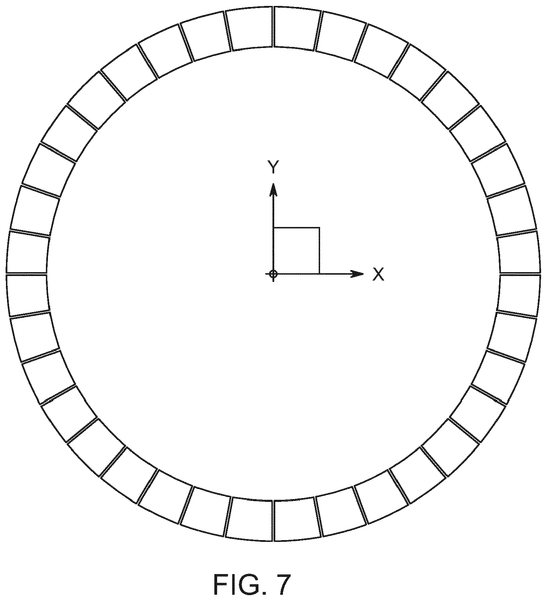

FIG. 7 illustrates a closed magnetic ring that may be used as a magnetic alignment component in an automotive wireless charging module according to an exemplary embodiment of the present disclosure. The closed magnetic ring may be configured to facilitate alignment of a mobile device having a complementary magnetic alignment component with the automotive wireless charging module.

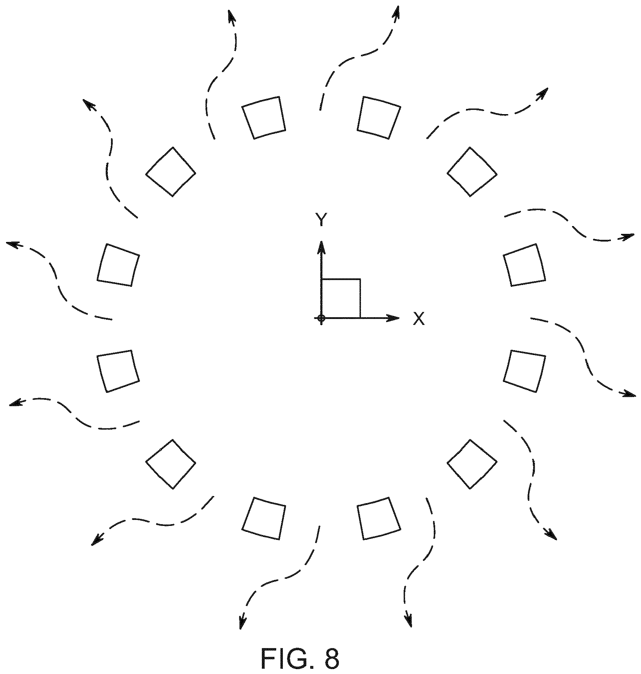

FIG. 8 illustrates a segmented or fragmented magnetic ring that may be used as a magnetic alignment component in an automotive wireless charging module according to an exemplary embodiment of the present disclosure. The segmented or fragmented magnetic ring may be configured to facilitate alignment of a mobile device having a complementary magnetic alignment component with the automotive wireless charging module.

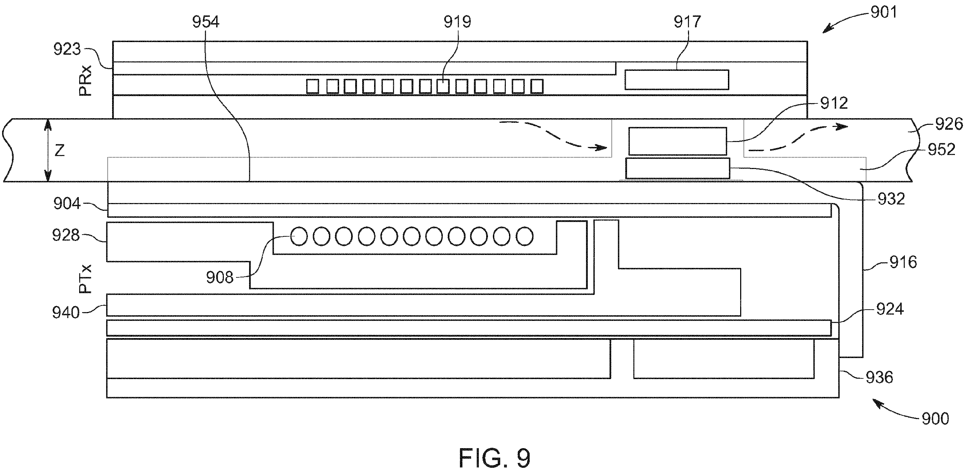

FIG. 9 is a partial cross-sectional view showing a mobile device positioned on an automotive wireless charging module according to an exemplary embodiment of the present disclosure in which the automotive wireless charging module includes a magnet ring that is segmented or fragmented (*e.g*., FIG. 8, *etc*.) for ventilation purposes.

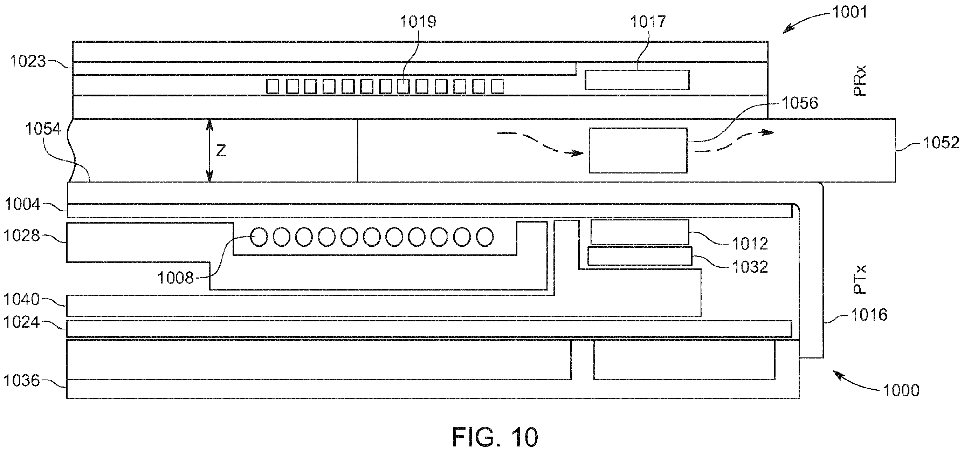

FIG. 10 is a partial cross-sectional view showing a mobile device positioned on an automotive wireless charging module according to an exemplary embodiment of the present disclosure in which the automotive wireless charging module includes a secondary magnet within a compliant cover.

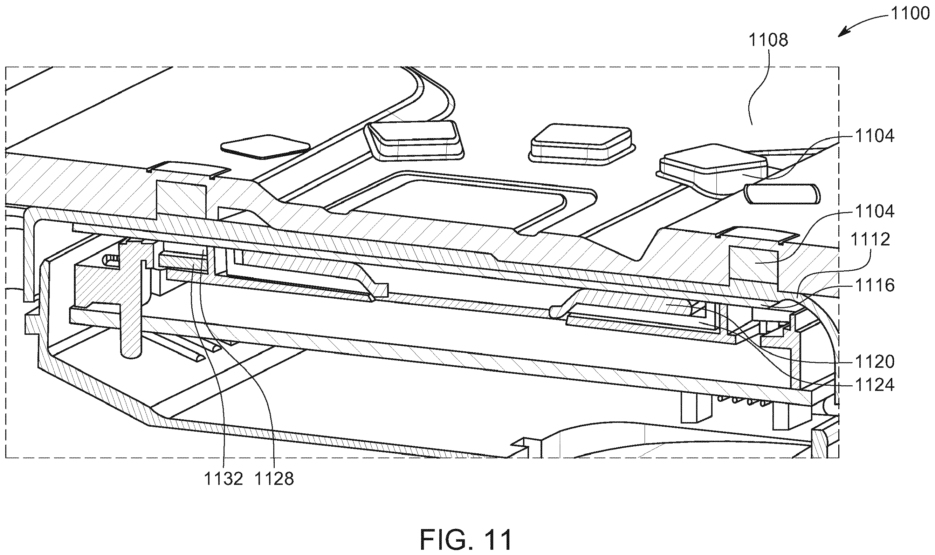

FIG. 11 is a partial cross-sectional view of an automotive wireless charging module according to an exemplary embodiment of the present disclosure in which the automotive wireless charging module includes a segmented or fragmented magnetic ring configured to provide the ability to use the openings for active cooling.

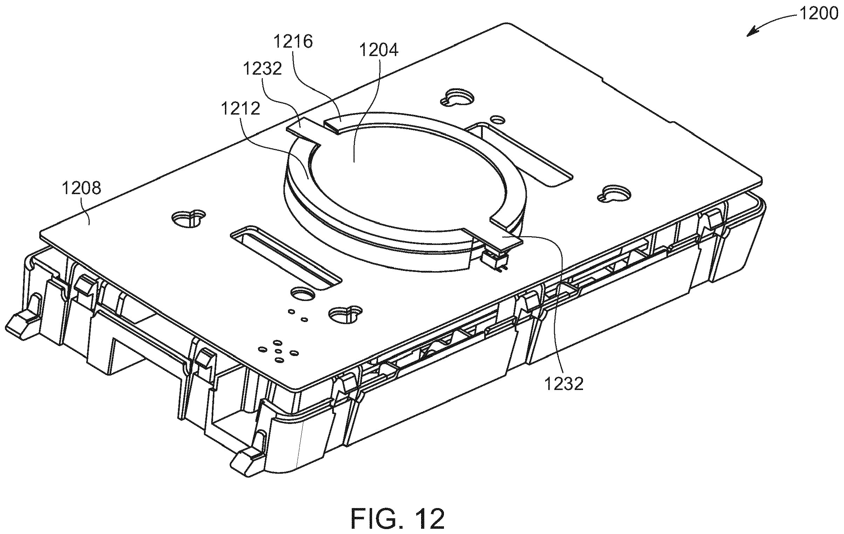

FIG. 12 is a perspective view of a wireless charging module including first and second printed circuit boards (PCBs) positioned at different heights and electrically connected to each other to thereby cooperatively define or provide a singular/unified NFC antenna according to an exemplary embodiment of the present disclosure.

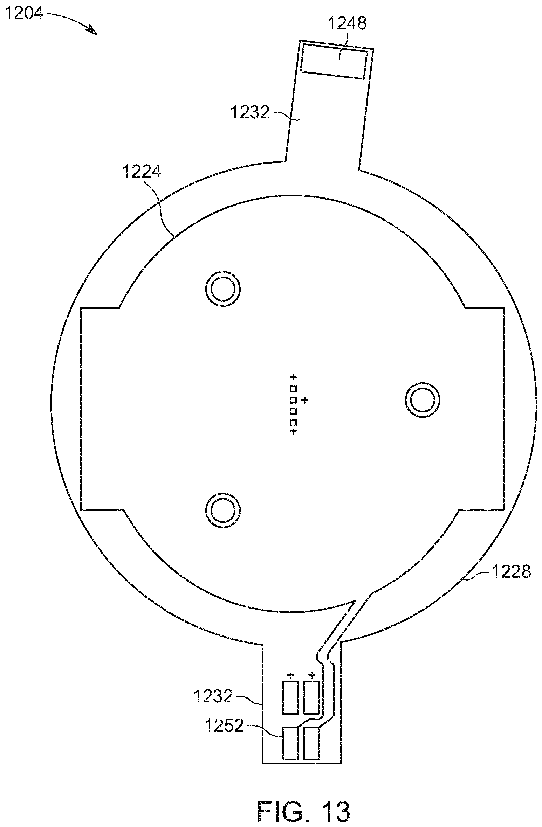

FIG. 13 illustrates a first NFC antenna structure along the first side of the first PCB shown in FIG. 12.

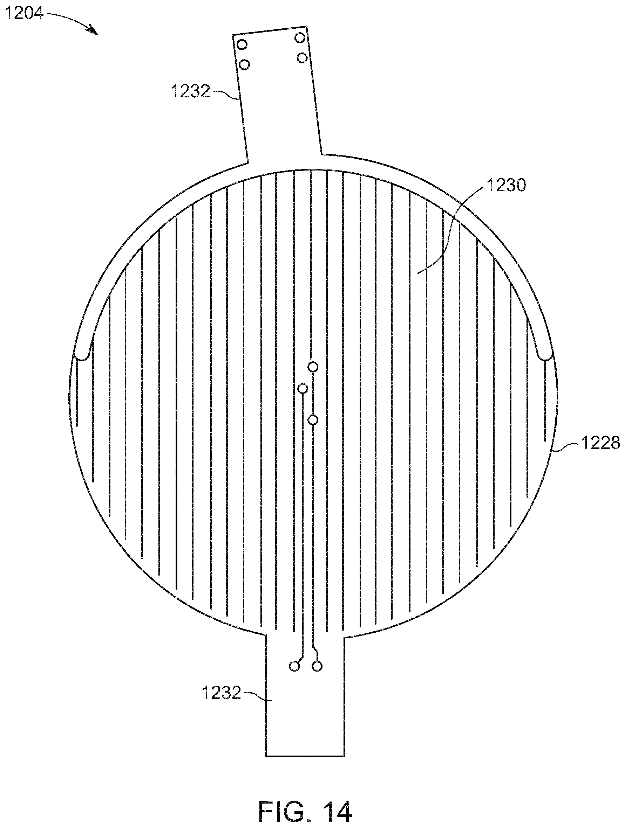

FIG. 14 illustrates an electrical field shield (E-shield) grid along a second opposite side of the first PCB shown in FIG. 13.

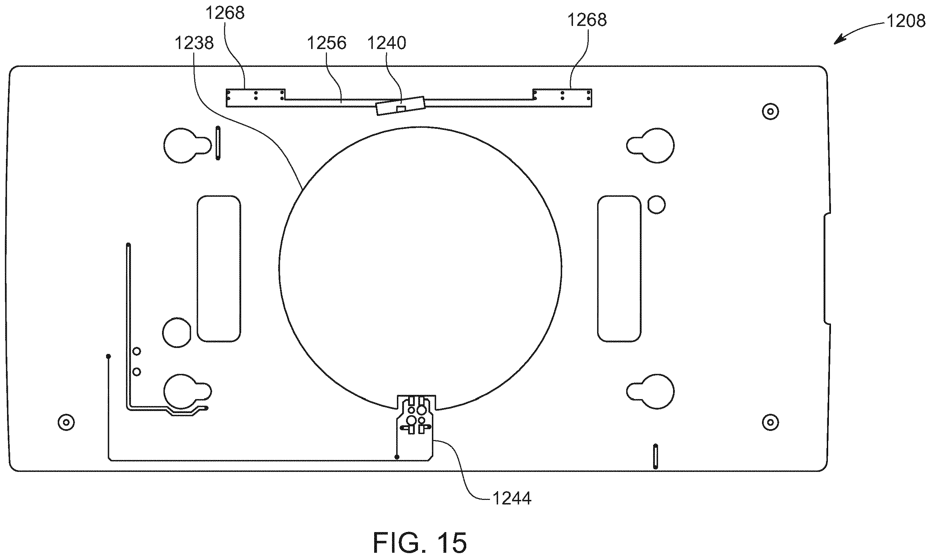

FIG. 15 illustrates a ground bus structure and electrically-conductive plates usable for electrically connecting the E-shield grid (FIG. 14) along the first PCB with the mainboard electronics ground of the second PCB.

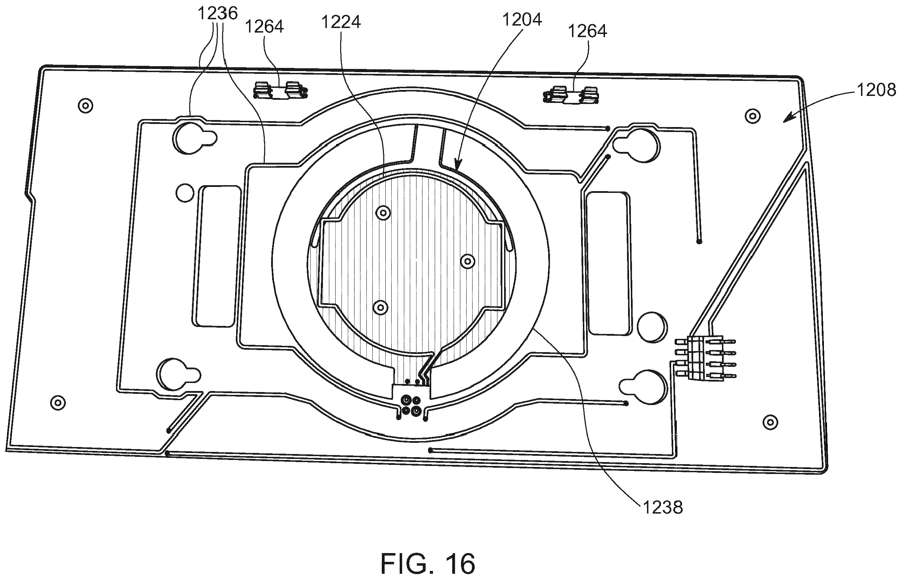

FIG. 16 illustrates the first and second NFC antenna structures along the first and the second PCBs shown in FIG. 12 that are electrically connected to each other to thereby cooperatively define or provide the singular/unified NFC antenna (*e.g*., NFC antenna having four loops, *etc.*) according to an exemplary embodiment of the present disclosure.

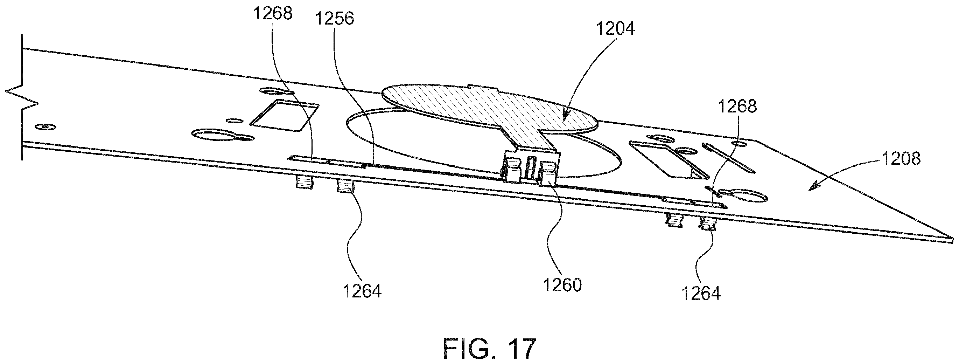

FIG. 17 illustrates the electrical connection between the E-shield grid along the first PCB and a ground bar structure along the second PCB via a ground clamp and electrically-conductive (*e.g*., tin, *etc.*) plate along the second PCB according to an exemplary embodiment of the present disclosure.

### DETAILED DESCRIPTION

The detailed description that follows describes exemplary embodiments and the features disclosed are not intended to be limited to the expressly disclosed combination(s). Therefore, unless otherwise noted, features disclosed herein may be combined together to form additional combinations that were not otherwise shown for purposes of brevity.

An automotive wireless charger may include an NFC module at a location such that the placement of a mobile device on the charging surface of the wireless charger facilitates interaction between the NFC module in the automotive wireless charger and an NFC reader of the mobile device. The NFC module in the automotive wireless charger and the NFC reader of the mobile device may be part of an NFC communication subsystem that enables communication (*e.g*., device identification, *etc*.) from the NFC module located in the automotive wireless charger to the NFC reader circuit located in the mobile device.

The NFC communication subsystem may enable the mobile device and the automotive wireless charger to determine if both support a same wireless charging standard (*e.g*., Qi wireless charging standard, *etc.*) defining a communication protocol. In which case, the mobile device and the automotive wireless charger may communicate in accordance with that communication protocol.

A mobile device and an automotive wireless charger may each include annular magnetic alignment components (*e.g*., DC magnets in FIGS. 5, 6, 9, and 10, *etc.*)*.* The mobile device may include an NFC coil (*e.g*., NFC coil shown in FIGS. 3 and 4, *etc.*) disposed inboard of and concentric with the annular magnetic alignment component. An NFC protocol can be used to allow the mobile device to identify the wireless charger when their annular magnetic alignment components are brought into alignment. For example, the NFC coil of the mobile device may be coupled with an NFC reader circuit while the NFC antenna of the wireless charger may be coupled with an NFC module. When the mobile device and the wireless charger are brought into proximity, the NFC reader circuit of the mobile device may be activated to read the NFC module of the wireless charger and obtain information (*e.g*., device identification, *etc*.) from the wireless charger.

As recognized herein, however, wireless charging designs (*e.g*., APPLE MPP wireless charging design, *etc*.) require specific distances between the magnet in the transceiver coil, the additional annular alignment magnetic components, and the receiver magnet. In one conventional automotive wireless charger, the commonly used large or massive printed circuit board (PCB) substrate would increase the distances between the counterpart magnet parts, which would make it essentially impossible to reach the required specific distances between the counterpart magnet parts.

In other conventional common wireless charger designs on the market, the use of an antenna PCB substrate also increases the distance between the transmitter and receiver coils. And the increased distance between the transmitter and receiver coils has a negative impact on the efficiency of the wireless charging system.

FIG. 4 illustrates a mobile device 404 including an NFC antenna structure 460 designed as a wire that is placed in the annular air gap between the annular magnetic alignment component 418 and the inductive charging receiver coil 412. A wireless charger (*e.g*., MAGSAFE charger, *etc*.) for the mobile device 404 may also include an NFC antenna structure designed as a wire that is placed in an annular air gap between an inductive charging transmitter coil and an annular magnetic alignment component. But as recognized herein, it is not possible to extend the wire and improve the NFC antenna structures in the mobile device 404 and counterpart wireless charger because the metallic parts from the inductive charging transmitter coil disturb the NFC magnetic field. And this disturbance of the NFC magnetic field limits the NFC detection range and limits the coupling with different NFC devices along the entire surface of the top cover of the wireless charger.

Some mobile devices (*e.g*., an IPHONE smartphone, *etc.*) have NFC antennas that are not centered or aligned with the center of the mobile devices. When such a mobile device is centrally positioned on the charging area of a wireless charger, the non-centered NFC antenna of the mobile device will not be NFC-detected. This means that the mobile device cannot establish an NFC communication with the NFC module in the wireless charger when the mobile device is perfectly magnetically aligned to the wireless charger via their annular magnetic alignment components. For example, an IPHONE smartphone may include an NFC antenna in its upper edge such that the NFC antenna is not centered. When the IPHONE smartphone is perfectly magnetically aligned to the wireless charger via their annular magnetic alignment components, the non-centered NFC antenna of the IPHONE smartphone will not be NFC-detectable such that this IPHONE smartphone will be unable to establish an NFC communication with the NFC module in the wireless charger.

Additionally, some mobile devices have centered NFC antennas but do not have annular magnetic alignment components for magnetic alignment with the wireless charger. In which case, the centered NFC antenna may also not always be NFC-detectable. Without the magnetic attachment, the mobile device may move around on the charging surface of the wireless charger, *e.g*., due to movement of the vehicle in rough conditions, braking, acceleration, *etc.* And the mobile device may move along the charging surface to a location such that the mobile device's NFC antenna is no longer in range and not NFC-detectable.

Also NFC cards cannot be detected outside the area of the wireless power transmitter coil in conventional wireless chargers. And if a relatively large or massive printed circuit board (PCB) substrate is used for the NFC antenna in the wireless charger, the PCB would require a relatively large hole (*e.g*., about equal to the inductive wireless charging transmitter module, *etc*.) in the middle, which would also limit the NFC functionality in this area.

After recognizing the above NFC antenna structure/functionality limitations associated with some conventional wireless charging designs (*e.g*., APPLE MPP wireless charging design, MAGSAFE charger, *etc*.)*,* exemplary embodiments of automotive wireless charging modules were developed and/or are disclosed herein that include optimized or improved NFC antennas.

FIG. 5 illustrates an exemplary embodiment of an automotive wireless charging module 500 comprising an NFC foil or thin film antenna 504. The NFC foil or thin film antenna 504 includes antenna structure disposed on or defined by a foil or thin film substrate (*e.g*., copper foil, *etc.*)*.* The NFC foil or thin film antenna 504 is disposed over and extends across an inductive charging transmitter coil 508 of the automotive wireless charging module 500.

The NFC foil or thin film antenna 504 is disposed under a charging surface of the automotive wireless charging module 500. The NFC foil or thin film antenna 504 extends over and across an annular magnetic alignment component 512 (*e.g*., annular DC magnet array, *etc.*) disposed within a housing or enclosure 516 of the automotive wireless charging module 500. The NFC foil or thin film antenna 504 also extends along a sufficient portion of an entirety or substantial entirety of the inner surface (*e.g*., a charging surface, *etc*.) of the top cover 520 of the enclosure 516. Advantageously, this may allow the automotive wireless charging module 500 to support and detect NFC devices (*e.g*., smartphones, NFC cards, *etc*.) placed anywhere on the whole charging surface of the automotive wireless charging module 500. The charging surface may comprise plastic, glass, silicone, or other material(s) permeable to AC and DC magnetic fields.

The magnetic alignment component 512 is configured to magnetically couple with a complementary magnetic alignment component 517 (*e.g*., annular DC magnet array, *etc.*) of a mobile device 501 for aligning the mobile device 501 on the charging surface of the automotive wireless charging module 500. For example, the DC magnet 512 of the automotive wireless charging module 500 is preferably configured to magnetically couple with the DC magnet 517 of the mobile device 501 for aligning the mobile device's Rx coil 519 with the Tx coil 508 of the automotive wireless charging module 500 at a preferred or optimum charging location at which the mobile device 501 will receive maximum or optimum power from the automotive wireless charging module 500.

The magnetic alignment component 512 may comprise an annular magnetic alignment component disposed within the housing 516 and generally surrounding the inductive charging coil 508. The magnetic alignment component 512 may comprise an annular magnet array defining a full circular magnetic ring entirely surrounding the inductive charging coil 508. Or the magnetic alignment component 512 may comprise an annular magnet array defining a partial circular ring including first and second spaced apart end portions such that a gap is defined between the first and second spaced apart end portions.

The annular magnetic alignment component 512 may comprise one or more arcuate magnetic sections arranged in a full circular or partial circular annular configuration. Each arcuate magnet section may include inner and outer arcuate regions respectively having magnetic polarities oriented in opposite first and second axial directions. Each arcuate magnet section may include a central arcuate region disposed between the inner and outer arcuate regions that is not magnetically polarized.

The NFC foil or thin film antenna 504 may be coupled with an NFC module. The NFC module may comprise a printed circuit on a printed circuit board (PCB). For example, the NFC module may comprise a circuit on a main logic board 524 within the housing 516 of the automotive wireless charging module 500. The main logic board 524 may include control circuitry for controlling operation of the inductive charging coil 508 in accordance with the Qi wireless charging protocol or other suitable protocol.

The mobile device 501 may include an NFC antenna coupled with an NFC reader circuit. In this example, placement of the mobile device 501 on the charging surface of the automotive wireless charging module 500 may enable communication from the NFC module of the automotive wireless charging module 500 to the NFC reader circuit of the mobile device 501. The mobile device 501 may further include a magnetic shield 523 that is configured to prevent the magnetic field from entering the mobile device 501 behind the charging Rx coil 519.

The automotive wireless charging module 500 further includes shielding 528 disposed under the inductive charging coil 508. The shielding 528 is configured for providing protection against a magnetic field generated by the inductive charging coil 508 while also supporting wireless charging and NFC frequency bands. The shielding 528 may comprise ferrite, such as Nickel Zinc (Ni-Zn) ferrite, Manganese Zinc (Mn-Zn) ferrite, *etc.*

The automotive wireless charging module 500 also includes a magnetic shield 532 disposed under the magnetic alignment component 512. The magnetic shield 532 may comprise an annular magnetic shield (*e.g*., a metal ring, *etc.*) formed from one or more materials having a high magnetic permeability. The magnetic shield 532 is configured for redirecting magnetic fields to prevent the magnetic fields from propagating beyond the annular magnetic shield 532 to thereby protect sensitive electronic components located beyond the annular magnetic shield 532 from magnetic interference. By way of example, the magnetic shield 532 may comprise a metal component having a shape (*e.g*., annular shape, ring shape, *etc*.) corresponding to the shape of the magnetic alignment component 512.

FIG. 5 also shows a layer 526 disposed between the mobile device 501 and the cover or top portion 520 of the enclosure 516 of the automotive wireless charging module 500. The layer 526 may comprise a covering or pad *(e.g.,* rubber, silicone elastomer, thermoplastic elastomer, *etc*.) on the enclosure 516, *e.g*., that is configured to function as a cushion and/or friction pad for the mobile device 501, *etc.* Or the layer 526 may represent a case of the mobile device 501, an air gap, or a spaced vertical distance Z between the mobile device 501 and the enclosure 516 (*e.g*., plastic, *etc.*) of the wireless charging module 500.

The housing or enclosure 516 of the automotive wireless charging module 500 includes the top cover or upper portion 520 and a bottom or lower portion 536. The upper and lower portions 520, 536 of the housing 516 are configured to be coupled together such that an interior compartment is cooperatively defined between the upper and lower housing portions 520, 536. The bottom portion 536 may also be configured to support the main logic board 524 and a support structure 540 (*e.g*., a plastic support frame, *etc.*)*.* The support structure 540 may be configured for supporting the inductive charging coil 508, magnetic alignment component 512, shielding 528, and magnetic shield 532. As shown in FIG. 5, the support structure 540 may include a recessed portion (*e.g*., annular groove or slot, *etc.*) configured for receiving and retaining the magnetic alignment component 512 and magnetic shield 532 therein.

FIG. 6 illustrates an exemplary embodiment of an automotive wireless charging module 600 comprising an NFC antenna 604 provided (*e.g*., via selective metallization or printing, *etc*.) along one or both sides of a top cover 620 of the enclosure or housing 616. The printed/metallized NFC antenna structure is disposed over and extends across an inductive charging transmitter coil 608 of the automotive wireless charging module 600. The top cover 620 may comprise plastic, textile, paper, or other materials having selective metallization thereon that defines the NFC antenna structure.

The printed/metallized NFC antenna 604 is disposed under a charging surface of the automotive wireless charging module 600. The printed/metallized NFC antenna 604 extends over and across an annular magnetic alignment component 612 (*e.g*., annular DC magnet array, *etc.*) disposed within the housing or enclosure 616 of the automotive wireless charging module 600. The printed/metallized NFC antenna 604 also extends along a sufficient portion of an entirety or substantial entirety of the inner surface (*e.g*., a charging surface, *etc.*) of the top cover 620 of the enclosure 616. Advantageously, this may allow the automotive wireless charging module 600 to support and detect NFC devices (*e.g*., smartphones, NFC cards, *etc.*) placed anywhere on the whole charging surface of the automotive wireless charging module 600.

Other than the printed/metallized NFC antenna 604, the other illustrated components of the automotive wireless charging module 600 may be substantially similar or identical to the corresponding components of the automotive wireless charging module 500, although this is not required for all exemplary embodiments. For brevity, a detailed description of the inductive charging coil 608, magnetic alignment component 612, mainboard 624, layer 626, shielding 628, magnetic shield 632, bottom housing portion 636, and support structure 640 of the automotive wireless charging module 600 will therefore not be repeated.

Similarly, the mobile device 601 may be substantially similar or identical to the mobile device 501, although this is not required for all exemplary embodiments. For brevity, a detailed description of the DC magnet 617, coil 619, and magnetic shield 623 of the mobile device 601 will therefore not be repeated.

FIG. 9 illustrates an exemplary embodiment of an automotive wireless charging module 900 comprising an NFC antenna 904 that includes antenna structure on a printed circuit board (PCB) substrate. The NFC antenna 904 is disposed over and extends across an inductive charging transmitter coil 908.

In this exemplary embodiment, the automotive wireless charging module 900 includes a segmented or fragmented magnetic ring 912 (*e.g*., FIG. 8, *etc*.). The magnet ring 912 is segmented or fragmented for ventilation purposes to allow a cooling air flow as represented by arrows between the gaps separating the magnet segments.

The segmented or fragmented magnetic ring 912 is supported by or disposed within a supporting structure, cover, or mat 952 (*e.g*., rubber, thermoplastic elastomer (TPE), other flexible compliant non-conductive material, *etc.)* such that the segmented or fragmented magnetic ring 912 is located higher in the Z axis above the NFC antenna 904 of the automotive wireless charging module 900. Accordingly, the segmented or fragmented magnetic ring 912 is positioned closer to the mobile device 901 such that better magnetic alignment between the wireless charging module 900 and the mobile device 901 can be provided.

The segmented or fragmented magnetic ring 912 may define airflow channels through the supporting structure 952 thereby enabling air cooling (*e.g*., active air cooling along a center area of the mobile device 901 between PTx and PRx, *etc*.)*.* In this illustrated embodiment, the automotive wireless charging module 900 includes an NFC antenna 904 on a printed circuit board. In other embodiments, the automotive wireless charging module 900 may include a differently configured NFC antenna, such as an NFC foil or thin film antenna (*e.g*., NFC foil or thin film antenna 504 (FIG. 5), printed/metallized NFC antenna 604 (FIG. 6), *etc.*)*.*

The compliant cover 952 can be formed of any desired compliant material, such as rubber or something that has a compliant nature and can be continuous and uniform in nature or can be formed of ribs and have voids (as desired). The metallic ring 932 which is intended to shield the magnetic DC field can be either moved close to or in the compliant cover 952 as shown in FIG. 9 or may be supported by the support frame 940. The compliant cover 952 may be placed permanently on top of a first surface 954 of the housing 916 so that the orientation of the magnetic ring 912 is maintained with respect to the transmitting coil 908 and the magnetic ring 912 is positioned above or on top of the first surface 954. As can be appreciated, the compliant cover 952 can be provided with a low contour to keep the distance between the transmitting coil 908 and receiving coil 919 small and allow the magnetic force to retain the mobile device 901 in the desired location so that corresponding receiving coil 919 is also in the desired location (for example, aligned with the transmitting coil 908). Hence the magnetic ring 912 in the compliant cover 952 can help align the transmitting coil 908 with the receiving coil 919 while providing a stronger magnetic force that can more effectively align the two coils 908, 919 in the desired orientation.

The NFC antenna 904 is disposed under a charging surface of the automotive wireless charging module 900. The NFC antenna structure 904 extends under and across the segmented or fragmented magnetic ring 912 (*e.g*., annular DC magnet array, *etc.*)*.* The NFC antenna 604 also extends along a sufficient portion of an entirety or substantial entirety of the inner surface (*e.g*., a charging surface, *etc*.) of the top cover 920 of the enclosure 916. Advantageously, this may allow the automotive wireless charging module 900 to support and detect NFC devices (*e.g*., smartphones, NFC cards, *etc*.) placed anywhere on the whole charging surface of the automotive wireless charging module 900.

The other illustrated components of the automotive wireless charging module 900 may be substantially similar or identical to the corresponding components of the automotive wireless charging module 500, although this is not required for all exemplary embodiments. For brevity, a detailed description of the inductive charging transmitter coil 908, mainboard 924, layer 926, shielding 928, magnetic shield 932, bottom housing portion 936, and support frame 940 of the automotive wireless charging module 900 will therefore not be repeated.

Similarly, the mobile device 901 may be substantially similar or identical to the mobile device 501, although this is not required for all exemplary embodiments. For brevity, a detailed description of the DC magnet 917, coil 919, and magnetic shield 923 of the mobile device 901 will therefore not be repeated.

FIG. 10 illustrates an exemplary embodiment of an automotive wireless charging module 1000 comprising an NFC antenna 1004 that includes antenna structure on a printed circuit board (PCB) substrate. The NFC antenna 1004 is disposed over and extends across an inductive charging transmitter coil 1008.

In this exemplary embodiment, the automotive wireless charging module 1000 includes a secondary magnet 1056 within a compliant cover 1052. The compliant cover 1052 may be placed permanently on top of a first surface 1054 of the housing 1016. The compliant cover 1052 may be substantially similar or identical to the compliant cover 952 of the automotive wireless charging module 900, although this is not required for all exemplary embodiments.

The secondary magnet 1056 comprises a segmented or fragmented magnetic ring (*e.g*., FIG. 8, *etc.*). The secondary magnet 1056 is segmented or fragmented for ventilation purposes to allow a cooling air flow as represented by arrows between the gaps separating the magnet segments.

The secondary magnet 1056 is integrated into the compliant cover 1052 to reduce the distance between the secondary magnet 1056 and the magnetic ring 1017 of the mobile device 1001. The secondary magnet 1056 provides additional magnetic force and helps ensure the transmitting coil 1008 and the receiving coil 1019 are well aligned.

The other illustrated components of the automotive wireless charging module 1000 may be substantially similar or identical to the corresponding components of the automotive wireless charging module 500, although this is not required for all exemplary embodiments. For brevity, a detailed description of the inductive charging transmitter coil 1008, magnetic alignment component 1012, mainboard 1024, shielding 1028, magnetic shield 1032, bottom housing portion 1036, and support frame 1040 of the automotive wireless charging module 1000 will therefore not be repeated.

Similarly, the mobile device 1001 may be substantially similar or identical to the mobile device 501, although this is not required for all exemplary embodiments. For brevity, a detailed description of the DC magnet 1017, coil 1019, and magnetic shield 1023 of the mobile device 1001 will therefore not be repeated.

FIG. 11 is a partial cross-sectional views of an automotive wireless charging module 1100 according to an exemplary embodiment of the present disclosure in which the automotive wireless charging module 1100 includes a segmented or fragmented magnetic ring 1104 (*e.g*., FIG. 8, *etc*.) configured to provide the ability to use the openings for active cooling.

The segmented or fragmented magnetic ring 1104 is positioned within a compliant cover 1108 that includes an integrated air duct. The compliant cover 1108 is positioned on a first housing surface 1112 of the wireless charging module 1100. The segmented or fragmented magnetic ring 1104 is above the first housing surface 1112 and located higher in the Z axis than the NFC antenna 1116. The segmented or fragmented magnetic ring 1104 is substantially concentric with the inductive charging coil 1116. The NFC antenna 1116 may comprise a printed circuit board (PCB) antenna including NFC antenna structure on a PCB substrate that extends along a sufficient portion of an entirety or substantial entirety of the charging surface of the wireless charging module 1100. Or the NFC antenna 1116 may comprise a foil antenna, a thin film antenna, or antenna structure printed, metallized, and/or directly mounted in and/or along either or both sides of a top cover of the wireless charging module 1100. Also shown in FIG. 11 are shielding 1124 (*e.g*., ferrite, *etc.*) under the transmittal coil 1120 and a magnetic ring 1128 disposed around the transmitter coil 1120. A permeable shield 1132 is disposed under the magnetic ring 112 and around the transmitter coil 1120.

FIG. 12 illustrates a wireless charging module 1200 including first and second printed circuit boards (PCBs) 1204, 1208 positioned at different heights and electrically connected to thereby cooperative define or provide a singular/unified NFC antenna according to an exemplary embodiment of the present disclosure. Advantageously, the wireless charging module 1200 may be configured to meet MPP requirements about the distance between the NFC coil, magnet, and smartphone considering also the camera bump of the IPHONE smartphone while still being able to provide NFC communication across the entire surface.

The wireless charging module 1200 includes first and second permanent magnet fragments, segments, or portions 1212, 1216 (broadly, magnetic alignment components) at a substantially same height as the first PCB 1204. The first and second magnets 1212, 1216 are configured to magnetically couple with a complementary magnetic alignment component (*e.g*., annular DC magnet array, *etc*.) of a mobile device for aligning the mobile device on the charging surface of the wireless charging module 1200. For example, the magnets 1212, 1216 may be configured to magnetically couple with a DC magnet 418 of a mobile device 404 (FIG. 4) for aligning the mobile device's Rx coil 412 with the active charging area defined by Tx coils of the wireless charging module 1200 at a preferred or optimum charging location at which the mobile device 404 will receive maximum or optimum power from the wireless charging module.

As shown in FIG. 13, the first PCB 1204 includes or defines a first NFC antenna structure 1224 along a first side of the first PCB 1204. The first NFC antenna structure 1224 is along the first PCB's main or middle portion 1228 (*e.g*., circular portion, *etc.*)*.*

As shown in FIG. 14, the first PCB 1204 includes or defines an electrical field shield (E-shield) grid 1230 along a second side of the first PCB 1204. The E-shield grid 1230 may be configured to block AC electric fields emitted by the Tx coils of the wireless charging module 1200 while permitting AC magnetic fields to pass through. The E-shield grid 1230 may be configured to shield the electrical part of the electromagnetic field. The E-shield grid 1230 may be configured to cover the TX coil module of the wireless charging module 1200 and be located along the first PCB 1204 for covering the MPP coil.

The first PCB 1204 includes extensions 1232 (e.g., rectangular extensions, *etc.*) that extend outwardly from the main portion 1228 of the first PCB 1204. As shown in FIG. 12, the PCB's extensions 1232 are configured to extend between gaps defined between spaced-part end portions of the arcuate magnet sections 1212, 1216.

The first PCB 1204 defines the first NFC antenna structure 1224 such that the first NFC antenna structure 1224 does not vertically overlap (in the Z-direction) the first and second magnets 1212, 1216. Instead, the first NFC antenna structure 1224 defined by the first PCB 1204 is confined within an interior area defined generally between the first and second magnets 1212, 1216.

As shown in FIG. 16, the second PCB 1208 includes or defines a second NFC antenna structure 1236 (FIG. 16). In this exemplary embodiment, the second NFC antenna structure 1236 includes a first portion (*e.g*., first or inner loop, *etc*.) that extends along the second PCB 1208 adjacent but outside of the opening 1238 in the PCB 1208. The second NFC antenna structure 1236 also includes second and third portions (*e.g*., second and third loops, *etc.*) that extend along the second PCB 1208. The third portion (*e.g*., outermost loop, *etc*.) of the second NFC antenna structure 1236 is disposed along a perimeter of the second PCB 1208. The second portion (*e.g*., intermediate loop, *etc*.) of the second NFC antenna structure 1236 is disposed generally between the first and third portions of the second NFC antenna structure 1236. The PCB opening 1238 may be configured to accommodate and/or correspond with a shape and size of a support structure for the first PCB 1204 and/or the magnets 1212, 1216. The second PCB 1208 defines second NFC antenna structure 1236 such that second NFC antenna structure 1236 is outside of and does not vertically overlap (in the Z-direction) the magnets 1212, 1216

The second PCB 1208 includes portions 1240, 1244 configured for electrical connection with corresponding portions 1248, 1252, respectively, of the first PCB 1204 (FIG. 13), to thereby electrically connect the first NFC antenna structure 1224 along the first PCB 1204 with the second NFC antenna structure 1236 along the second PCB 1208. The first and second NFC antenna structure 1224 and 1236 of the respective first and second PCBs 1204, 1208 thus cooperatively define or provide a singular/unified NFC antenna (*e.g*., having four loops, *etc*.) that does not vertically overlap (in the Z-direction) the first and second magnets 1212, 1216 while still being able to provide NFC communication across the entire surface.

The first and second NFC antenna structure 1224 and 1236 of the respective first and second PCBs 1204, 1208 cooperatively define or provide the singular/unified NFC antenna (*e.g*., having four loops, *etc*.) such that that wireless charging module 1200 is able to support and detect an NFC antenna of a mobile device placed anywhere on the charging surface of the wireless charging module 1200. The configuration of the first and second NFC antenna structures 1224 and 1236 is an example only as other configurations for the NFC antenna structures (*e.g*., more or less than four loops, different shapes, different locations, *etc.*) may be used in other exemplary embodiments.

FIGS. 16 and 17 illustrate the exemplary way in which the E-shield grid 1230 along the first PCB 1204 may be electrically connected with the mainboard electronics ground of the second PCB 1208. As shown, the E-Shield grid 1230 may be electrically connected with the ground bar structure 1256 (FIGS. 15 and 17) along the second PCB 1206 via a ground clamp 1260 (FIG. 17) and electrically-conductive (*e.g.,* tin, *etc.*) plate 1240 along the second PCB 1208. Also shown in FIGS. 16 and 17 are additional ground clamps 1264 coupled with electrically-conductive (*e.g*., tin, *etc*.) plates 1268 at the end portions of the ground bar structure 1256 (*e.g*., copper bar structure, *etc.*)*.*

The NFC antenna may be coupled with an NFC module within the wireless charging module 1200 such that placement of a wireless charging receiver on the charging surface of the wireless charging module 1200 enables communication from the NFC module of the wireless charging module 1200 to an NFC reader circuit coupled with an NFC antenna of the wireless charging receiver.

The wireless charging module 1200 may be configured to be in compliance with the Qi2 wireless charging standard (*e.g*., Section 1.2 of the Wireless Power Consortium Qi Specification MPP System Specification Version 2.0 April 2023, *etc.*) such that the wireless charging module 1200 includes an MPP transmitter coil operable at a z-gap of up to 3.2 millimeters (mm) from the coil surface to the top surface of the charger (interface surface) of the defined coil module at an operating frequency of 360 kHz. Such a configuration is merely one possible configuration within the scope of this disclosure as other frequencies, powers levels, and z-gaps are contemplated, however, and the referenced Qi specification is not intended to be limiting. These parameters can be modified in a conventional manner to modify the capability of the system and/or to meet other specifications. For example, these parameters can be increased by using larger conductors, better materials, more efficient/effective components, better cooling, better shielding or some combination thereof. Naturally, system costs will limit the ability of the system to improve as a reasonable individual will eventually decide the additional increase in performance is not worth the additional cost.

In addition to the magnetic alignment features disclosed herein, there may also be need for an active cooling subsystem to cool down a wireless charging receiver (PRx) on the surface of the wireless charging transmitter (PTx). A temperature hotspot may be located in the center area of the PRx. Therefore, a high-volume flow in the center area of the PRx may be used to provide an efficient active cooling subsystem. This may be achieved by having a maximized or increased cross-sectional area for the air flow between PTx and PRx.

To optimize the cross-sectional area between PTx and PRx, the distance between the transmitter and receiver may be increased by adding additional material, such as by placing a compliant mat on top the wireless charger. The mat and the top cover of the wireless charger may, for example, be molded together. The mat may be configured to reduce slippage of the receiver, provide a visible surface of the PTx, and define an air duct(s) between PTx and PRx that is formed in the mat.

But the thickness of the mat placed between the transmitter and receiver will increase the distance between the magnets. The increased separation distance will reduce the magnetic force between the magnets, which may reduce the placement accuracy. To increase the force of the magnetic alignment, additional magnet rings or ferromagnetic material may be used in exemplary embodiment disclosed herein. And to increase the cross-sectional area between PTx and PRx, the magnet/ferromagnetic rings may fragmented or segmented. For example, a fragmented or segmented magnetic ring may be integrated into the compliant mat (*e.g*., rubber mat, *etc.*)*.* The combination of the fragmented or segmented magnetic ring and increasing the distance between transmitter and receiver by adding the thickness of the compliant mat will provide an improved or increased volume-flow to cool down the PRx on the transmitter.

In exemplary embodiments disclosed herein, the NFC antennas (*e.g*., NFC foil antenna, NFC thin film antenna, printed NFC antenna, metallized NFC antenna, NFC antenna metallic structure directly mounted in the top cover, *etc.*) are configured to allow the distance between the wireless charging transmitter coil module to the receiver coil module to be minimized or at least reduced. In turn, the reduced distance optimizes or at least improves efficiency of the wireless charger and enables implementation of the APPLE MPP wireless charging design into an automotive wireless charger. Exemplary embodiments disclosed herein also enable the automotive wireless charger to support and detect NFC devices (*e.g*., smartphones, NFC cards, *etc*.) placed anywhere on the whole charging surface of the wireless charger. Because the inductive wireless transmitter coil module will be closer to the mobile device's receiver coil module, the shielding, wireless transmitter coil, and magnetic alignment component will be relatively close to the NFC antenna and will disturb the NFC magnetic field if not accommodated. Therefore, exemplary embodiments include shielding material(s) (*e.g*., ferrite, *etc*.) configured to support both wireless charging and NFC frequency bands. In the area of the inductive wireless transmitter coil module, the NFC functionality can be optimized in exemplary embodiments disclosed herein.

Disclosed herein are exemplary embodiments of wireless charging modules including optimized near-field communication (NFC) antennas and that are suitable for use in vehicle applications (*e.g*., cars, trucks, buses, *etc*.)*.* In exemplary embodiments, a wireless charging module includes a housing defining an enclosure. An inductive charging coil is disposed within the housing. The inductive charging coil is configured to be operable for transferring power wirelessly through a charging surface of the wireless charging module. A magnetic alignment component is configured to magnetically couple with a complementary magnetic alignment component of a mobile device for aligning the mobile device on the charging surface. An NFC antenna extends across (*e.g*., is disposed over, *etc*.) the inductive charging coil. The NFC antenna may also extend along a sufficient portion of an entirety or substantial entirety of the charging surface. The NFC antenna may comprise a foil antenna, a thin film antenna, or antenna structure printed, metallized, and/or directly mounted in and/or along either or both sides of a top cover of the wireless charging module. The NFC antenna is configured to enable communication with a mobile device having an NFC antenna when the mobile device is placed on the charging surface.

In exemplary embodiments, the NFC antenna extends along a sufficient portion of an entirety or substantial entirety of the charging surface of the wireless charging module to enable the wireless charging module to support and detect an NFC antenna of a mobile device placed anywhere on the charging surface of the wireless charging module.

In exemplary embodiments, the NFC antenna is configured to enable the wireless charging module to support and detect an NFC antenna of a mobile device placed anywhere on the charging surface of the wireless charging module.

In exemplary embodiments, the NFC antenna extends across the magnetic alignment component.

In exemplary embodiments, the NFC antenna comprises a foil or thin film antenna including antenna structure disposed on or defined by a foil or thin film. The foil or thin film antenna is disposed over and extends across the inductive charging coil. The foil or thin film antenna may also extend across (*e.g*., over, *etc*.) the magnetic alignment component. The foil or thin film antenna may also extend along a sufficient portion of an entirety or substantial entirety of the charging surface to enable the wireless charging module to support and detect an NFC antenna of a mobile device placed anywhere on the charging surface of the wireless charging module.

In exemplary embodiments, the housing includes a top cover having opposite upper and lower sides. And the NFC antenna comprises antenna structure printed along either or both of the opposite upper and lower sides of the top cover. The antenna structure may be printed along either or both of the opposite upper and lower sides of the top cover such that the NFC antenna structure extends across (*e.g*., over, *etc*.) the magnetic alignment component. The NFC antenna structure may extend along a sufficient portion of an entirety or substantial entirety of the charging surface to enable the wireless charging module to support and detect an NFC antenna of a mobile device placed anywhere on the charging surface of the wireless charging module.

In exemplary embodiments, the housing includes a top cover having opposite upper and lower sides. The NFC antenna comprises antenna structure defined by selective metallization along either or both of the opposite upper and lower sides of the top cover. For example, either or both of the opposite upper and lower sides of the top cover may be selectively metallized such that the NFC antenna structure extends across (*e.g*., over, *etc.)* the magnetic alignment component and/or such that the NFC antenna structure extends along a sufficient portion of an entirety or substantial entirety of the charging surface to enable the wireless charging module to support and detect an NFC antenna of a mobile device placed anywhere on the charging surface of the wireless charging module.

In exemplary embodiments, the housing includes a top cover having opposite upper and lower sides. The NFC antenna comprises metallic antenna structure directly mounted in and/or along either or both of the opposite upper and lower sides of the top cover. For example, the metallic antenna structure may be directly mounted in and/or along either or both of the opposite upper and lower sides of the top cover such that the metallic antenna structure extends across (*e.g*., over, *etc*.) the magnetic alignment component and/or such that the metallic antenna structure extends along a sufficient portion of an entirety or substantial entirety of the charging surface of the wireless charging module to enable the wireless charging module to support and detect an NFC antenna of a mobile device placed anywhere on the charging surface of the wireless charging module.

In exemplary embodiments, the magnetic alignment component comprises a segmented or fragmented magnetic ring. The housing includes a first surface that substantially defines a top side of the housing. And the segmented or fragmented magnetic ring may be above the first surface of the housing. The segmented or fragmented magnetic ring may be substantially concentric with the inductive charging coil. The segmented or fragmented magnetic ring may be located higher in the Z axis than the NFC antenna. The wireless charging module may include a compliant cover positioned on the first surface of the housing. The segmented or fragmented magnetic ring may be positioned in the compliant cover. A ferromagnetic ring may be disposed under the segmented or fragmented magnetic ring. The NFC antenna may comprise a printed circuit board (PCB) antenna including NFC antenna structure on a PCB substrate that extends along a sufficient portion of an entirety or substantial entirety of the charging surface of the wireless charging module to enable enabling the wireless charging module to support and detect an NFC antenna of a mobile device placed anywhere on the charging surface of the wireless charging module. Or the NFC antenna may comprise a foil antenna, a thin film antenna, or antenna structure printed, metallized, and/or directly mounted in and/or along either or both sides of a top cover of the wireless charging module.

In exemplary embodiments, the NFC antenna is coupled with an NFC module within the housing of the wireless charging module. And placement of a mobile device on the charging surface enables communication from the NFC module of the wireless charging module to an NFC reader circuit coupled with an NFC antenna of the mobile device.

In exemplary embodiments, shielding is disposed under the inductive charging coil of the wireless charging module. The shielding is configured for providing protection against a magnetic field generated by the inductive charging coil while also supporting wireless charging and NFC frequency bands. The shielding may comprise ferrite, Nickel Zinc (Ni-Zn) ferrite, and/or Manganese Zinc (Mn-Zn) ferrite.

In exemplary embodiments, the magnetic alignment component comprises an annular magnetic alignment component disposed within the housing and generally surrounding the inductive charging coil of the wireless charging module. The annular magnetic alignment component may comprise a full circular ring that entirely surrounds the inductive charging coil. Or the annular magnetic alignment component may comprise a partial circular ring having first and second end portions that are spaced apart such that a gap is defined between the first and second end portions.

In exemplary embodiments, a magnetic shield is disposed under the magnetic alignment component. The magnetic alignment component may comprise an annular magnetic alignment component (*e.g.* a full circular magnet array, partial circular magnet array, *etc.*) disposed within the housing and generally surrounding the inductive charging coil of the wireless charging module. And the magnetic shield may comprise an annular magnetic shield having a shape (*e.g*., full circular ring, partial circular ring, non-circular, *etc*.) corresponding with the shape of the annular magnetic alignment component. The annular magnetic shield is formed from one or more materials (*e.g*., metal, *etc*.) having a high magnetic permeability. The annular magnetic shield is configured for redirecting magnetic fields to prevent the magnetic fields from propagating beyond the annular magnetic shield to thereby protect sensitive electronic components located beyond the annular magnetic shield from magnetic interference.

In exemplary embodiments, a main logic board is within the housing of the wireless charging module. A support structure is within the housing above the main logic board. The support structure is configured for supporting the inductive charging coil, the magnetic shield, and the magnetic alignment component.

In exemplary embodiments, the wireless charging module includes first and second printed circuit board (PCBs) vertically spaced apart from each other. The first PCB includes a first PCB substrate and a first NFC antenna structure along the first PCB substrate. The second PCB includes a second PCB substrate and a second NFC antenna structure along the second PCB substrate. The second PCB substrate is vertically spaced apart from the first PCB substate. The first and second NFC antenna structures are electrically connected to thereby cooperatively define a singular/unified NFC antenna for the wireless charging module even though the first and second NFC antenna structures are vertically spaced apart (in the Z-direction) from each other.

In exemplary embodiments, the magnetic alignment component comprises first and second magnets at a substantially same height as the first PCB substrate. The first NFC antenna structure along the first PCB substrate is within an interior area along the first side of the first PCB defined between the first and second magnets without vertically overlapping (in the Z-direction) the first and second magnets. The first PCB includes or defines an electrical field shield (E-shield) grid along the second side of the first PCB. The second NFC antenna structure along the second PCB substrate is outside of the first and second magnets without vertically overlapping (in the Z-direction) the first and second magnets. The first and second NFC antenna structures respectively along the vertically spaced apart first and second PCB substrates may cooperatively define the NFC antenna to extend along a sufficient portion of an entirety or substantial entirety of the charging surface of the wireless charging module to enable the wireless charging module to support and detect an NFC antenna of a mobile device placed anywhere on the charging surface of the wireless charging module.

In exemplary embodiments, the first NFC antenna structure includes a first loop portion along the first PCB substrate. The second NFC antenna structure includes an inner loop portion, an intermediate loop portion, and an outer loop portion. The outer loop portion is along an outer perimeter of the second PCB substrate. The inner loop portion is along the second PCB substrate outside of a footprint of the first loop portion along the first PCB substrate. The intermediate loop portion is along the second PCB substrate between the inner loop portion and the outer loop portion. The NFC antenna is cooperatively defined by the first and second NFC antenna structures including the first loop portion along the first PCB substrate and the inner, intermediate, and outer loop portions along the second PCB substrate such that NFC antenna is along (*e.g*., without vertically overlapping each other, *etc*.) a sufficient portion of an entirety or substantial entirety of the charging surface of the wireless charging module to enable the wireless charging module to support and detect an NFC antenna of a mobile device placed anywhere the charging surface of the wireless charging module.

The disclosure provided herein describes features in terms of preferred and exemplary embodiments thereof. Numerous other embodiments, modifications and variations within the scope of the appended claims will occur to persons of ordinary skill in the art from a review of this disclosure.

## Claims

1. A wireless charging module comprising:
a housing that defines an enclosure;
an inductive charging coil within the housing, the inductive charging coil configured to be operable for transferring power wirelessly through a charging surface of the wireless charging module;
a magnetic alignment component configured to magnetically couple with a complementary magnetic alignment component of a mobile device for aligning the mobile device on the charging surface of the wireless charging module; and
a near-field communication (NFC) antenna extending across the inductive charging coil, whereby the NFC antenna is configured to enable communication with a mobile device having an NFC antenna when the mobile device is placed on the charging surface.

2. The wireless charging module of claim 1, wherein the NFC antenna is configured to enable the wireless charging module to support and detect an NFC antenna of a mobile device placed anywhere on the charging surface of the wireless charging module.

3. The wireless charging module of any one of the preceding claims, wherein the NFC antenna extends along a sufficient portion of an entirety or substantial entirety of the charging surface of the wireless charging module to enable the wireless charging module to support and detect an NFC antenna of a mobile device placed anywhere on the charging surface of the wireless charging module.

4. The wireless charging module of any one of the preceding claims, wherein the NFC antenna extends across the magnetic alignment component.

5. The wireless charging module of any one of the preceding claims, wherein the NFC antenna comprises a foil or thin film antenna including antenna structure disposed on or defined by a foil or thin film.

6. The wireless charging module of any one of the preceding claims, wherein the housing includes a top cover having opposite upper and lower sides; and wherein:
the NFC antenna comprises antenna structure printed along either or both of the opposite upper and lower sides of the top cover; or
the NFC antenna comprises antenna structure defined by selective metallization along either or both of the opposite upper and lower sides of the top cover; or
the NFC antenna comprises metallic antenna structure directly mounted in and/or along either or both of the opposite upper and lower sides of the top cover.

7. The wireless charging module of any one of the preceding claims, wherein the magnetic alignment component comprises a segmented or fragmented magnetic ring.

8. The wireless charging module of claim 7, wherein:
the housing includes a first surface that substantially defines a top side of the housing;
the segmented or fragmented magnetic ring is above the first surface of the housing; and
the segmented or fragmented magnetic ring is located higher than the NFC antenna.

9. The wireless charging module of claim 8, further comprising a compliant cover positioned on the first surface of the housing, wherein:
the segmented or fragmented magnetic ring is positioned in the compliant cover;
the segmented or fragmented magnetic ring is substantially concentric with the inductive charging coil;
a ferromagnetic ring is disposed under the segmented or fragmented magnetic ring; and
the NFC antenna comprises a printed circuit board (PCB) antenna including NFC antenna structure on a PCB substrate, the NFC antenna structure on the PCB substrate extending along a sufficient portion of an entirety or substantial entirety of the charging surface of the wireless charging module to enable the wireless charging module to support and detect an NFC antenna of a mobile device placed anywhere on the charging surface of the wireless charging module.

10. The wireless charging module of any one of the preceding claims, further comprising shielding disposed under the inductive charging coil, the shielding configured for providing protection against a magnetic field generated by the inductive charging coil while also supporting wireless charging and NFC frequency bands.

11. The wireless charging module of any one of the preceding claims, wherein:
the magnetic alignment component comprises an annular magnetic alignment component that is substantially concentric with and/or generally surrounds the inductive charging coil;
the annular magnetic alignment component comprises a full circular ring that entirely surrounds the inductive charging coil or a partial circular ring having first and second end portions that are spaced apart such that a gap is defined between the first and second end portions; and
the wireless charging module further comprises an annular magnetic shield formed from one or more materials having a high magnetic permeability and/or configured for redirecting magnetic fields to prevent the magnetic fields from propagating beyond the annular magnetic shield to thereby protect sensitive electronic components located beyond the annular magnetic shield from magnetic interference.

12. The wireless charging module of any one of the preceding claims, further comprising a support structure within the housing, the support structure configured for supporting the inductive charging coil, the magnetic alignment component, and a magnetic shield disposed under the magnetic alignment component.

13. The wireless charging module of any one of the preceding claims, wherein:
the wireless charging module includes first and second printed circuit board (PCBs) vertically spaced apart from each other;
the first PCB includes a first PCB substrate and a first NFC antenna structure along the first PCB substrate;
the second PCB includes a second PCB substrate and a second NFC antenna structure along the second PCB substrate, the second PCB substrate vertically spaced apart from the first PCB substate; and
the first and second NFC antenna structures are electrically connected to thereby cooperatively define the NFC antenna of the wireless charging module.

14. The wireless charging module of claim 13, wherein:
the magnetic alignment component comprises first and second magnets at a substantially same height as the first PCB substrate;
the first PCB includes first and second opposite sides;
the first NFC antenna structure includes a first loop portion within an interior area along the first side of the first PCB defined between the first and second magnets without vertically overlapping the first and second magnets;
the first PCB includes or defines an electrical field shield (E-shield) grid along the second side of the first PCB;
the second NFC antenna structure along the second PCB substrate is outside of the first and second magnets without vertically overlapping the first and second magnets; and
the second NFC antenna structure includes an inner loop portion, an intermediate loop portion, and an outer loop portion, the outer loop portion along an outer perimeter of the second PCB substrate, the inner loop portion along the second PCB substrate outside of a footprint of the first loop portion along the first PCB substrate, the intermediate loop portion along the second PCB substrate generally between the inner loop portion and the outer loop portion;
whereby the NFC antenna is cooperatively defined by the first and second NFC antenna structures including the first loop portion along the first PCB substrate and the inner, intermediate, and outer loop portions along the second PCB substrate such that the NFC antenna is along a sufficient portion of an entirety or substantial entirety of the charging surface of the wireless charging module to enable the wireless charging module to support and detect an NFC antenna of a mobile device placed anywhere the charging surface of the wireless charging module.

15. The wireless charging module of any one of the preceding claims, wherein the NFC antenna is coupled with an NFC module within the housing of the wireless charging module, whereby placement of a mobile device on the charging surface enables communication from the NFC module of the wireless charging module to an NFC reader circuit coupled with an NFC antenna of the mobile device.
